Europäisches Patentamt

European Patent Office

Office européen des brevets

(19)

(11) Veröffentlichungsnummer: **0 189 062**
**A2**

(12) # EUROPÄISCHE PATENTANMELDUNG

(21) Anmeldenummer: 86100213.7

(22) Anmeldetag: 09.01.86

(51) Int. Cl.⁴: **C 01 B 25/46**

(30) Priorität: 24.01.85 DE 3502215

(43) Veröffentlichungstag der Anmeldung: **30.07.86**
**Patentblatt 86/31**

(84) Benannte Vertragsstaaten: **AT BE CH DE FR GB IT LI NL SE**

(71) Anmelder: **HOECHST AKTIENGESELLSCHAFT,**
**Postfach 80 03 20, D-6230 Frankfurt am Main 80 (DE)**

(72) Erfinder: **Kolkmann, Friedrich, Dr.,**
**Tiergartenstrasse 22e, D-5040 Brühl (DE)**
Erfinder: **Schimmel, Günther, Dr., Ehrenstrasse 16,**
**D-5042 Erftstadt (DE)**
Erfinder: **Gradl, Reinhard, Dr., Helmbacher Weg 27,**
**D-5042 Erftstadt (DE)**

(54) **Verfahren zur Überführung schwermetallhaltiger Rückstände in feste deponiefähige Produkte.**

(57) Zur Überführung von bei der Entfernung von Schwermetallen aus Nassphosphorsäure mit Dialkyldithiophosphorsäuren und gegebenenfalls einem Adsorptionsmittel anfallenden schwermetallhaltigen Rückständen in feste, deponiefähige Produkte vermischt man intensiv die von der gereinigten Phosphorsäure abgetrennten schwermetallhaltigen Rückstände mit einer solchen Menge von festen, basisch reagierenden Substanzen, dass eine 20 gewichtsprozentige wässrige Suspension des entstandenen Produktes einen pH-Wert von 5 bis 12, vorzugsweise von 7 bis 10, aufweist.

EP 0 189 062 A2

Verfahren zur Überführung schwermetallhaltiger
Rückstände in feste deponiefähige Produkte

Die vorliegende Erfindung betrifft ein Verfahren zur Überführung von bei der Entfernung von Schwermetallen aus Naßphosphorsäure mit Dialkyldithiophosphorsäuren und gegebenenfalls einem Adsorptionsmittel anfallenden schwermetallhaltigen Rückständen in feste deponiefähige Produkte.

Es ist bekannt, Schwermetallionen, insbesondere Ionen des Kupfers, Bleis, Quecksilbers, Arsens und Cadmiums, aus Naßverfahrensphosphorsäure entweder durch flüssig/ flüssig Extraktion mit Hilfe von wasserunlöslichen Diestern der Dithiophosphorsäure (US-PS 4 503 016) oder durch Behandeln mit einem Adsorptionsmittel und einem Diorganyldithiophosphorsäureester (US-PS 4 452 768) zu entfernen. Im ersten Fall wird eine eine viskose Flüssigkeit darstellende Extraktphase erhalten, welche neben Phosphorsäure und Dithiophosphorsäureester Schwermetalle in hoher Konzentration enthält, während im zweiten Fall ein schwermetallhaltiger Rückstand anfällt, welcher außerdem Phosphorsäure, Dithiophosphorsäureester und das Adsorptionsmittel enthält.

Weder die Extraktphase noch der schwermetallhaltige Rückstand, bei welchen es sich um eine Flüssigkeit bzw. um einen thixotropen Feststoff handelt, können so nicht deponiert werden, da sie mit Wasser eluierbar sind. Beim Auftreffen von Regen auf die Deponie würde ein großer Teil der enthaltenen Schwermetallionen, der Phosphorsäure und des Dithiophosphorsäureesters in Lösung gehen, so daß die Deponie-Sickerwässer eine Umweltgefährdung bedeuten würden.

Bei vielen technischen Verfahren wird zur Abtrennung von Schwermetallen aus wäßrigen Lösungen die geringe Löslichkeit der Schwermetallhydroxide ausgenutzt. Zur Fällung dieser Hydroxide werden aus Kostengründen meist gebrannter Kalk (CaO), Kalkhydrat (Ca(OH)$_2$), Calcit (CaCO$_3$) oder Natronlauge verwendet.

So werden beim Verfahren nach der US-PS 4 457 848 die bei der extraktiven Reinigung roher Naßphosphorsäure anfallenden schwermetallhaltigen, schwefel- und phosphorsauren Raffinate durch Zugabe einer Calciumverbindung zweistufig im sauren und im alkalischen Bereich behandelt. Dabei fällt im sauren Bereich hauptsächlich Gips aus, während im alkalischen Bereich im wesentlichen schwermetallhaltiges Calciumphosphat ausgefällt wird. Der Gips enthält nur noch 2 bis 4 Gewichts% P$_2$O$_5$ und ist daher ein unbedenkliches Deponieprodukt, während das schwermetallhaltige Calciumphosphat mit 15 bis 25 Gewichts% P$_2$O$_5$ und niedrigem Sulfatgehalt als Phosphatrohstoff sowohl im elektrothermischen Phosphorofen als auch im Düngemittelsektor eingesetzt werden kann.

Aufgabe der vorliegenden Erfindung ist es, ein technisch einfaches Verfahren anzugeben, mit welchem die bei der Entfernung von Schwermetallen aus Naßphosphorsäure anfallenden schwermetallhaltigen Rückstände bzw. viskosen Extrakte in feste, unbedenkliche, deponiefähige Produkte überführt werden können. Das wird erfindungsgemäß dadurch erreicht, daß man die von der gereinigten Phosphorsäure abgetrennten schwermetallhaltigen Rückstände mit einer solchen Menge von festen, basisch reagierenden Substanzen intensiv vermischt, daß eine 20 gewichtsprozentige wäßrige Suspension des entstandenen Produktes einen pH-Wert von 5 bis 12, vorzugsweise von 7 bis 10, aufweist.

Das Verfahren gemäß der Erfindung kann weiterhin wahlweise auch noch dadurch ausgestaltet sein, daß

a) man die schwermetallhaltigen Rückstände mit einer eine viskose Flüssigkeit darstellenden Extraktphase vermischt, welche bei der flüssig/flüssig Extraktion von Schwermetallen aus Naßphosphorsäure mit Hilfe von wasserunlöslichen Estern der Dithiophosphorsäure von der wäßrigen Phase abgetrennt wurde;

b) man schwermetallhaltigen Filterrückstand und Extraktphase im Gewichtsverhältnis von 2 : 1 bis 1 : 2 miteinander vermischt;

c) als feste, basisch reagierende Substanzen Calciumverbindungen dienen;

d) als Calciumverbindung gebrannter Kalk (CaO) verwendet ist;

e) als Calciumverbindung Kalkhydrat (Ca(OH)$_2$) verwendet ist.

Beim erfindungsgemäßen Verfahren werden schwermetallhaltige Filterrückstände direkt eingesetzt, während Extraktphasen vorteilhafterweise zunächst mit Filterrückständen im geeigneten Verhältnis vermischt werden.

Beim Verfahren gemäß der Erfindung sind zur Vermischung der Komponenten am besten Kugelmühlen, Mörsermühlen, Kneter oder Drehrohre mit Blenden geeignet.

Beim erfindungsgemäßen Verfahren werden unmittelbar feste, deponiefähige, rieselfähige Produkte erhalten, ohne daß - wie bei der Schwermetallfällung aus Lösungen - eine kostenintensive Abtrennung der ausgefällten Schwermetallverbindungen von der Lösung erforderlich ist und ohne daß ein schwermetallhaltiges Abwasser anfällt.

In den nach dem Verfahren gemäß der Erfindung erhaltenen Produkten liegen die Schwermetalle nahezu vollständig in wasserunlöslicher Form vor, so daß mit Wasser praktisch keine Schwermetalle aus diesen Produkten herausgelöst werden. Auch die Eluation von Phosphaten erfolgt nur in sehr begrenztem Umfang.

Beispiel 1    (Vergleichsbeispiel)

Von einem Filterrückstand mit 29,0 % $P_2O_5$, 870 ppm Kupfer, 350 ppm Cadmium und 280 ppm Zink, welcher in Anlehnung an Beispiel 13 der US-PS 4 452 768, jedoch unter Verwendung eines Silikates (Perlit) als Adsorptionsmittel erhalten worden ist, wurden 20 g mit 80 ml Wasser 16 Stunden bei Raumtemperatur geschüttelt. Die entstandene Suspension, welche einen pH-Wert von 1,5 aufwies, wurde filtriert und der Filterkuchen zweimal mit je 20 ml Wasser gewaschen. Das Filtrat und die beiden Waschwässer wurden vereinigt und zur Bestimmung der eluierten Schwermetalle sowie des eluierten Phosphates analysiert. Die Analysenwerte und die berechneten Eluationsgrade sind in der Tabelle angegeben.

Beispiel 2    (Vergleichsbeispiel)

20 g des in Beispiel 1 beschriebenen Filterrückstandes wurden mit 3,3 g $Ca(OH)_2$ 20 Minuten in einer Mörsermühle intensiv vermischt. Dabei entstand ein pastöses Gemenge. Eine 20 %ige wäßrige Suspension dieses Gemenges wies einen pH-Wert von 4,2 auf.

Beispiel 3    (gemäß der Erfindung)

20 g des in Beispiel 1 beschriebenen Filterrückstandes wurden mit 6,6 g $Ca(OH)_2$ 20 Minuten in einer Mörsermühle intensiv vermischt, wobei 23,4 g eines festen Produktes erhalten wurden.

20 g des Produktes wurden mit 80 ml Wasser 16 Stunden bei Raumtemperatur geschüttelt. Die entstandene Suspension wies einen pH-Wert von 7,8 auf. Sie wurde filtriert und zweimal mit je 20 ml Wasser gewaschen. Das Filtrat und die beiden Waschwasser wurden vereinigt und zur Bestimmung der eluierten Schwermetalle und des eluierten Phosphates analysiert. Die Analysenwerte und die berechneten Eluationswerte sind in der Tabelle angegeben.

Beispiel 4   (gemäß der Erfindung)

20 g des in Beispiel 1 beschriebenen Filterrückstandes wurden mit 10 g $Ca(OH)_2$ 20 Minuten in einer Mörsermühle intensiv vermischt, wobei 26,8 g eines festen Produktes erhalten wurde.

Die Eluation des Produktes wurde wie in Beispiel 3 durchgeführt, wobei die 20 %ige wäßrige Suspension einen pH-Wert von 9,9 aufwies.
Die Analysenwerte und die berechneten Eluationswerte sind in der Tabelle angegeben.

T a b e l l e

| Beispiel | Kalk-hydrat-zusatz % | Konsistenz des Produktes | $p_H$-Wert der 20 %igen Suspension | Gehalt im Eluat [ppm]   und Eluationsgrad bezogen auf Gehalt im Produkt [%] | | | | | | | |
| --- | --- | --- | --- | --- | --- | --- | --- | --- | --- | --- | --- |
| | | | | Cd ppm | % | Cu ppm | % | Zn ppm | % | $P_2O_5$ ppm | % |
| 1 | ohne | thixotrop | 1,5 | 68 | 100 | 160 | 100 | 50 | 100 | 44800 | 87,1 |
| 2 | 16,5 | pastös | 4,2 | | | | | | | | |
| 3 | 33 | rieselfähig | 7,8 | < 0,005 | <0,01 | <0,05 | <0,04 | < 0,2 | <0,4 | 230 | 0,45 |
| 4 | 50 | pulvrig | 9,9 | < 0,005 | <0,01 | <0,05 | <0,04 | < 0,2 | <0,5 | 150 | 0,38 |

HOECHST AKTIENGESELLSCHAFT                    0 189 062

Verfahren zur Überführung schwermetallhaltiger
Rückstände in feste deponiefähige Produkte


Patentansprüche:

1. Verfahren zur Überführung von bei der Entfernung von
   Schwermetallen aus Naßphosphorsäure mit Dialkyldithiophosphorsäuren und gegebenenfalls einem Adsorptionsmittel anfallenden schwermetallhaltigen Rückständen in
   feste deponiefähige Produkte, dadurch gekennzeichnet,
   daß man die von der gereinigten Phosphorsäure abgetrennten schwermetallhaltigen Rückstände mit einer solchen Menge von festen, basisch reagierenden Substanzen
   intensiv vermischt, daß eine 20 gewichtsprozentige
   wäßrige Suspension des entstandenen Produktes einen
   pH-Wert von 5 bis 12, vorzugsweise von 7 bis 10, aufweist.

2. Verfahren nach Anspruch 1, dadurch gekennzeichnet, daß
   man die schwermetallhaltigen Rückstände  mit einer eine
   viskose Flüssigkeit darstellenden Extraktphase vermischt, welche bei der flüssig/flüssig Extraktion von
   Schwermetallen aus Naßphosphorsäure mit Hilfe von wasserunlöslichen Estern der Dithiophosphorsäure von der
   wäßrigen Phase abgetrennt wurde.

3. Verfahren nach Anspruch 1 oder 2, dadurch gekennzeichnet, daß man schwermetallhaltigen Filterrückstand und
   Extraktphase im Gewichtsverhältnis von 2 : 1 bis 1 : 2
   miteinander vermischt.

4. Verfahren nach einem der Ansprüche 1 bis 3, dadurch gekennzeichnet, daß als feste, basisch reagierende Substanzen Calciumverbindungen dienen.

5. Verfahren nach Anspruch 4, <u>dadurch gekennzeichnet</u>, daß als Calciumverbindung gebrannter Kalk (CaO) verwendet ist.

6. Verfahren nach Anspruch 4, <u>dadurch gekennzeichnet</u>, daß als Calciumverbindung Kalkhydrat ($Ca(OH)_2$) verwendet ist.